(19) Europäisches Patentamt

European Patent Office

Office européen des brevets

(11) Veröffentlichungsnummer: **0 265 537 B1**

(12) **EUROPÄISCHE PATENTSCHRIFT**

(45) Veröffentlichungstag der Patentschrift: **04.03.92**

(21) Anmeldenummer: **86114870.8**

(22) Anmeldetag: **27.10.86**

(51) Int. Cl.⁵: **F16K  3/08**

---

(54) **Scheibenventil.**

---

(43) Veröffentlichungstag der Anmeldung:
**04.05.88 Patentblatt  88/18**

(45) Bekanntmachung des Hinweises auf die
Patenterteilung:
**04.03.92 Patentblatt  92/10**

(84) Benannte Vertragsstaaten:
**BE CH DE FR GB LI SE**

(56) Entgegenhaltungen:
**DE-A- 2 843 481**
**DE-C- 819 029**
**FR-A- 2 512 156**

(73) Patentinhaber: **Bürkert GmbH**
**Christian-Bürkert-Strasse 13-17**
**W-7118 Ingelfingen(DE)**

(72) Erfinder: **Hettinger, Gerhard**
**Friedrich-Ludwigstrasse 21**
**W-7118 Ingelfingen(DE)**
Erfinder: **Nestler, Volker, Dr.**
**Berlichinger Strasse 61**
**W-7119 Niedernhall(DE)**

(74) Vertreter: **Degwert, Hartmut, Dipl.-Phys. et al**
**Patent Attorneys Prinz, Leiser, Bunke & Part-**
**ner Manzingerweg 7**
**W-8000 München 60(DE)**

EP 0 265 537 B1

**Beschreibung**

Die Erfindung betrifft ein Scheibenventil nach dem Oberbegriff des Patentanspruchs 1.

Ein Scheibenventil dieser Gattung ist aus der DE-A-2 843 481 bekannt und ist mit einem in einem Ventilgehäuse gebildeten Durchströmkanal und wenigstens zwei quer zu diesem angeordneten, konzentrischen und gegeneinander verdrehbaren Scheiben versehen, von denen die eine eine gehäusefeste Statorscheibe und die andere eine drehbar im Gehäuse gelagerte Rotorscheibe bildet und deren glatte Stirnfläche einander berühren und die mit Durchströmöffnungen versehen sind. Diese Öffnungen werden bei der Relativdrehung der Scheiben gegeneinander verschoben, mit kontinuierlichem Übergang zwischen einer Öffnungsstellung, in der die Durchgangsöffnungen der Scheiben zumindest annähernd einander gegenüberliegen, und einer Schließstellung, in der die Durchgangsöffnung der einen Scheibe einem geschlossenen Teil der anderen Scheibe gegenüberliegt. Die Durchströmöffnungen in der Statorscheibe sind als axial durchführende, diametral einander gegenüberliegende Bohrungen ausgebildet.

Diese Bohrungen münden auf der Seite der Rotorscheibe in einen radialen Überströmkanal, der in der Öffnungsstellung die beiden Durchströmöffnungen der Statorscheibe miteinander sowie mit einem axialen Zuströmkanal in Verbindung setzt, der an eine zentrale Durchströmöffnung der Statorscheibe angrenzt. Die Statorplatte ist auf ihrer von der Rotorplatte abgewandten Seite an ihrem Außenumfang und an der Begrenzung des in dem Ventilkörper gebildeten zentralen Zuströmkanals abgedichtet. Die beiden Scheiben sind in einem Innengehäuse angeordnet, welches in das Gehäuse eines herkömmlichen Ventils eingesetzt werden kann, insbesondere eines Ventils mit einem axial im Oberteil bewegbaren Dichtkegel.

Zur Steuerung und Regelung von Durchflüssen, Drücken, Temperaturen und Stoffkonzentrationen werden neben diskontinuierlich arbeitenden Ventilen, also Ventilen, die nur die beiden Endstellungen "Auf" oder "Zu" annehmen können, in letzter Zeit immer häufiger auch Ventile mit stetig variablem Durchfluß eingesetzt. Solche Ventile vermeiden das Pulsieren der von den Ventilen zu steuernden oder zu regelnden Prozeßgrößen um deren Sollwert.

Es ist allgemeiner Stand der Technik, einen stetig variablen Durchfluß in einem Ventil dadurch zu erzeugen, daß zwei oder mehr Scheiben aus Materialien geringer Oberflächenrauhigkeit und geringer Welligkeit, aber großer Härte, wie beispielsweise Oxydkeramik, die mit Durchgangsöffnungen ausgestattet sind, so gegeneinander verschoben werden, daß ein stetig variabler Öffnungsquerschnitt entsteht, der dem strömenden Medium einen stetig variablen Widerstand entgegensetzt und auf diese Weise zu einem stetig variablen Durchfluß führt. Es sind auch Ausführungsformen von Scheibenventilen bekannt, bei denen zwei konzentrische zylindrische Scheiben, die einander mit ihren Stirnflächen berühren, elektromotorisch gegeneinander verdreht werden. Der Verlauf der Durchflußkennlinie in Abhängigkeit vom relativen Drehwinkel der Scheiben kann über die Form der Öffnungen verhältnismäßig einfach an die Steuerungs- oder Regelungsaufgabe angepaßt werden: Es sind beispielsweise lineare, progressive und degressive Kennlinien möglich. Eine progressive Kennlinie erlaubt eine feine Ausregelung im Bereich kleiner Durchflüsse, eine degressive Kennlinie eine feine Ausregelung im Bereich großer Durchflüsse.

Bei derartigen Scheibenventilen trägt höchstens die halbe Querschnittsfläche der Scheiben zum Durchfluß bei, da die andere Hälfte der Scheibenfläche geschlossen sein muß, um eine Schließstellung zu ermöglichen. Herkömmliche Scheibenventile benötigen daher ein speziell für die Scheiben ausgelegtes Ventilgehäuse zur Aufnahme der Scheiben, deren Durchmesser erheblich größer als der des durch das Ventil führenden Strömungskanals ist. Die Ventilgehäuse herkömmlicher Scheibenventile lassen sich daher nicht aus üblichen und weitverbreiteten Gehäusen konventioneller Sitzventile herleiten. Insbesondere Membranventile herkömmlicher Bauart besitzen ein zweiteiliges Ventilgehäuse mit einem zwei Anschlußöffnungen aufweisenden Gehäusekörper und einem Deckel, der eine offene Seite des Gehäusekörpers verschließt und den Antriebsmechanismus der Membran aufnimmt. Die Verwendung eines solchen weitverbreiteten Ventilgehäuses bei Scheibenventilen war bisher nicht möglich oder aber zumindest mit dem schwerwiegenden Nachteil behaftet, daß der verfügbare Durchströmquerschnitt mindestens halbiert wurde.

Der Erfindung liegt die Aufgabe zugrunde, ein Scheibenventil der eingangs angegebenen Art dahingehend weiterzubilden, daß bei Verwendung von herkömmlichen Ventilgehäusen, wie sie für Membranventile, Sitzventile und dergleichen gebräuchlich sind, der volle Durchströmquerschnitt erhalten bleibt.

Diese Aufgabe wird bei dem gattungsgemäßen Scheibenventil erfindungsgemäß durch die im kennzeichnenden Teil des Anspruchs 1 angegebenen Merkmale gelöst.

Bei herkömmlichen Scheibenventilen lassen sich in Radialrichtung der Scheiben drei Zonen unterscheiden, nämlich eine zentrale Kreiszone, die geschlossen ist oder eine Öffnung für die Befestigung einer Drehantriebswelle aufweist, eine mittlere Ringzone, in welcher die Durchgangsöffnung angebracht ist, und eine ringförmige geschlossene Außenzone. Bei dem erfindungsgemäßen Scheibenventil hingegen sind vier verschiedene Zonen unterscheidbar, nämlich eine zentrale Kreiszone, welche mindestens eine Durchströmöffnung aufweist oder aber ganz geöffnet ist und mit dem Durchströmkanal des Ventils fluchtet, eine diese zentrale Kreiszone umgebende, geschlossene Ringzone, eine diese Ringzone umgebende weitere, ringförmige Zone, in welcher die gegeneinander verschiebbaren Durchgangsöffnungen der beiden Scheiben angeordnet sind, und eine ringförmige Außenzone, die geschlossen ist. Die Durchgangsöffnungen der Scheiben liegen somit radial außerhalb des Durchmessers des im Ventil gebildeten Durchströmkanals und umgeben diesen. Die Durchgangsöffnungen sind in der Nähe des Außenumfangs der Scheiben angeordnet, wo für diese Durchgangsöffnungen eine Querschnittsfläche zur Verfügung steht, die etwa gleich der Querschnittsfläche des Durchströmkanals im Ventilgehäuse ist. Die Durchgangsöffnungen können für lineare, progressive oder degressive Durchflußkennlinien in Abhängigkeit vom relativen Drehwinkel der Scheiben ausgelegt werden. Je nach Anzahl der Durchgangsöffnungen pro Scheibe ergeben sich verschiedene Drehwinkel zwischen Öffnungs- und Schließstellung. Ist die Anzahl der Durchgangsöffnungen größer als 1, so liegen die Durchgangsöffnungen einander stets paarweise diametral gegenüber und erstrecken sich über einen kleineren Bogenwinkel in Umfangsrichtung als die dazwischenliegenden, geschlossenen Scheibenteile.

Vorteilhafte Weiterbildungen der Erfindung sind in den Unteransprüchen angegeben.

Weitere Merkmale und Vorteile der Erfindung ergeben sich aus der folgenden Beschreibung von Ausführungsbeispielen und aus der Zeichnung, auf die Bezug genommen wird. In der Zeichnung zeigen:

Fig. 1
eine Schnittansicht einer bevorzugten Ausführungsform des Scheibenventils;

Fig. 2 und Fig. 3
schematische Darstellungen einer Scheibe zur Erläuterung des Erfindungsgedankens;

Fig. 4a
eine Draufsicht einer Rotorscheibe nach einer ersten Ausführungsform;

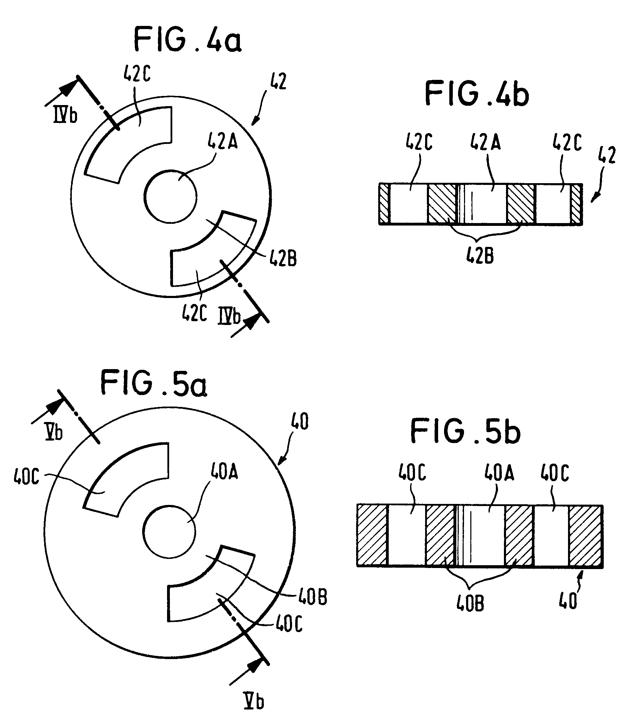

Fig. 4b
eine Schnittansicht entlang Linie IVb-IVb in Fig. 4a;

Fig. 5a
eine Draufsicht einer Statorscheibe für die Rotorscheibe nach Fig. 4a;

Fig. 5b
eine Schnittansicht entlang Linie Vb-Vb in Fig. 5a; und

Fig. 6
eine Schnittansicht eines herkömmlichen Membranventils.

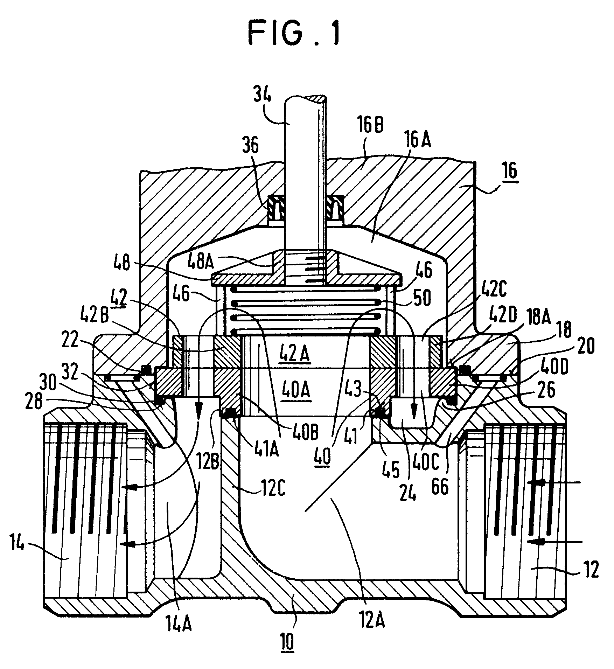

Bei der in Fig. 1 gezeigten Ausführungsform besteht das Ventilgehäuse aus einem Gehäusekörper 10 mit zwei Anschlußöffnungen 12, 14 und einem eine offene Seite des Gehäusekörpers 10 verschließenden Deckel 16. Der Deckel 16 weist einen Flansch 18 auf, der an eine ringförmige Anlagefläche 20 an der offenen Seite des Gehäusekörpers 10 unter Zwischenfügung eines Dichtrings 22, der in eine Nut im Flansch 18 eingelegt ist, angesetzt ist. Im Gehäusekörper 10 ist ein Durchströmkanal gebildet, der sich zwischen den miteinander koaxialen Anschlußöffnungen 12, 14 erstreckt und aus einem ersten Abschnitt 12A sowie aus einem zweiten Abschnitt 14A besteht. Der erste Abschnitt 12A des Durchströmkanals ist rechtwinklig abgebogen und erstreckt sich zwischen der Anschlußöffnung 12 und einer ringförmigen Stirnfläche 12B einer rohrförmigen Wandung 12C, welche diesen ersten Abschnitt 12A des Durchströmkanals umgibt. Die ringförmige Stirnfläche 12B liegt dem Deckel 16 gegenüber. Ein Ringkanal 24 ist konzentrisch zur ringförmigen Stirnfläche 12B und um diese herum angeordnet. Auf der Seite der Anschlußöffnung 14 ist der Ringkanal 24 zu dem Ende des zweiten Abschnitts 14A des Durchströmkanals hin offen und geht in diesen über. Der Ringkanal 24 ist auf seiner Außenseite durch einen hochgezogenen Ringwulst 26 begrenzt, der seinerseits eine konzentrische Ringnut 28 begrenzt, in die ein Dichtring 30 eingelegt ist. An die Ringnut 28 schließt sich eine zylindrische Innenwandung 32 an, die sich bis zu der ringförmigen Anlagefläche 20 erstreckt. Die Ebene, in welcher die ringförmige Stirnfläche 12B liegt, ist gegenüber der parallelen Ebene, in welcher die ringförmige Anlagefläche 20 liegt, zur Innenseite des Gehäusekörpers 10 hin zurückversetzt.

Der Deckel 16 umschließt einen allgemein glockenförmigen Innenraum 16A und weist einen Boden 16B auf, durch den sich eine Antriebswelle 34 hindurch erstreckt, die mittels einer Wellendichtung 36 abgedichtet ist. Die Antriebswelle 34 ist mittels eines in der Zeichnung nicht gezeigten Lagers im Boden 16B des Deckels 16 drehbar und in Axialrichtung unverschiebbar gelagert. Der Flansch 18 des Deckels 16 weist auf seiner Innenseite eine Eindrehung 18A auf, die bei auf dem Gehäusekörper 10 befestigtem Deckel 16 die zylindrische Wandung 32 fortsetzt und deren radiale Begrenzungsfläche der Ringnut 28 gegenüberliegt. In den Aufnahmeraum, der zwischen der Eindrehung 18A, der zylindrischen Wandung 32 und dem Ringwulst 26 gebildet ist, ist eine allgemein zylindrische Statorscheibe 40 eingelegt. Die Statorscheibe ist im Bereich ihres Außenumfangs auf ihrer dem Gehäusekörper 10 zugewandten Stirnfläche durch den Dichtring 30 gegen den Gehäusekörper 10 abgedichtet. Die zentrale Kreiszone der Statorscheibe 40 bildet eine Durchströmöffnung 40A, die annähernd mit dem durch die ringförmige Stirnfläche 12B begrenzten Ende des ersten Abschnitts 12A des Durchströmkanals fluchtet. Die Durchströmöffnung 40A ist von einer Ringzone 40B umgeben, die durchgehend geschlossen ist. An die dem Inneren des Gehäusekörpers 10 zugewandte Stirnseite der Ringzone 40B ist einteilig ein Ringbund 41 angeformt. In die ringförmige Stirnfläche 41A des Ringbundes 41 ist eine Ringnut 43 eingeformt, in welche ein Dichtring 45 eingelegt ist. Durch den Dichtring 45 wird die Ringzone 40B der Statorscheibe 40 gegen den Gehäusekörper 10 abgedichtet. Auf die dem Deckel 16 zugewandte Seite der Statorscheibe 40 ist eine zylindrische Rotorscheibe 42 aufgelegt. Die Rotorscheibe 42 weist einen etwas kleineren Außendurchmesser als die Statorscheibe 40 auf und liegt an ihrem Außenumfang in geringem Abstand von der Innenwandung der im Deckel 16 gebildeten Kammer 16A. Die zentrale Kreiszone der Rotorscheibe 42 bildet eine Durchströmöffnung 42A, die mit der Durchströmöffnung 40A der Statorscheibe 40 fluchtet. Die Durchströmöffnung 42A ist von einer geschlossenen Ringzone 40B umgeben, deren Innen- und Außendurchmesser mit der Ringzone 40B der Statorscheibe 40 übereinstimmt, so daß die beiden Ringzonen 40B, 42B übereinanderliegen. An der dem Deckel 16 zugewandten Stirnfläche der Ringzone 42B greifen die freien Enden von Übertragungselement en 46 an, die vorzugsweise als Krallen ausgebildet sind und in Vertiefungen der ihnen zugewandten Stirnfläche der Ringzone 42B eingreifen. Die Übertragungselemente 46 sind in Umfangsrichtung voneinander gleichmäßig beabstandet, so daß zwischen ihnen Durchtrittsöffnungen für das Durchströmen des fluiden Mediums in Radialrichtung verbleiben. Die Übertragungselemente 46 sind an ihren von der Rotorscheibe 42 abgewandten Enden an einer Antriebsscheibe 48 verankert, die sich parallel zu den Scheiben 40, 42 und im axialen Abstand von diesen erstreckt. Die Antriebsscheibe 48 ist mit einer Nabe 48A versehen, in der das Ende der Antriebswelle 43 befestigt ist. Auf der der Rotorscheibe 42 zugewandten Fläche der Antriebsscheibe 48 stützt sich das eine Ende einer Druckfeder 50 ab, deren gegenüberliegendes Ende sich auf der ihm zugewandten Stirnfläche der Ringzone 42B der Rotorscheibe 42 abstützt. Durch die Druckfeder 50 wird die Rotorscheibe 42 gegen die Statorscheibe 40 angedrückt.

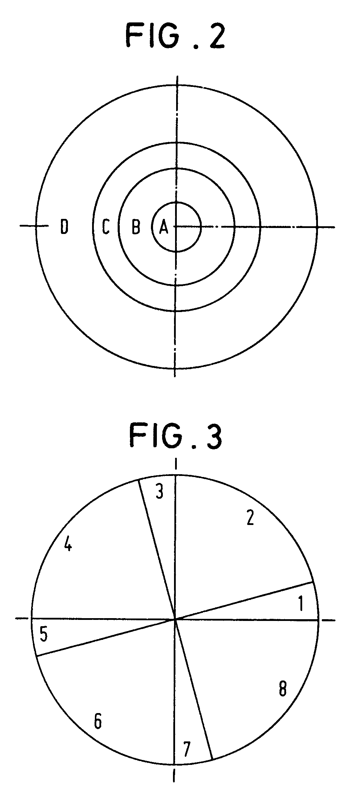

Die den Durchfluß steuernden Durchgangsöffnungen 40C, 42C der Statorscheibe 40 und Rotorscheibe 42 sind zwischen der Ringzone 40B, 42B und der ringförmigen Außenumfangszone 40D, 42D angeordnet. Die Anordnung und Ausbildung dieser Durchgangsöffnungen 40C, 42C ist für verschiedene Ausführungsformen in den Fig. 2 bis 7 veranschaulicht.

In Fig. 2 sind die vier konzentrischen Zonen A, B, C und D beider Scheiben dargestellt. Die zentrale Kreiszone A bildet ein oder mehrere Durchströmöffnungen, welche dem offenen Ende des ersten Abschnitts 12A des Durchströmkanals gegenüberliegen. Die zentrale Kreiszone A ist von einer geschlossenen Ringzone B umgeben. In der die geschlossene Ringzone B umgebenden Ringzone C sind die Durchgangsöffnungen angeordnet, durch deren Relativstellung zueinander der Durchströmquerschnitt des Scheibenventils eingestellt wird. Die äußere Ringzone D ist geschlossen.

In Fig. 3 ist eine Scheibe in Sektoren unterteilt, die mit 1 bis 8 numeriert sind. Geradzahlige und ungeradzahlige Sektoren liegen einander jeweils paarweise gegenüber. Die ungeradzahligen Sektoren erstrecken sich in Umfangsrichtung über einen kleineren Bogenwinkel als die dazwischenliegenden geradzahligen Sektoren. Die Durchgangsöffnungen liegen innerhalb der ungeradzahligen Sektoren. Die in der zentralen Kreiszone gebildeten Durchströmöffnungen können sich hingegen über sämtliche Sektoren 1 bis 8 erstrecken. Insbesondere kann auch die zentrale Kreiszone vollständig ausgespart sein.

Fig. 4a zeigt die Draufsicht einer Rotorscheibe 42, in deren Mitte eine durchgehende, kreisförmige Durchströmöffnung 42A gebildet ist. Die Durchströmöffnung ist von einer geschlossenen Ringzone 42B umgeben. In der die geschlossene Ringzone 42B umgebenden Ringzone, die in Fig. 2 schematisch mit C bezeichnet ist, sind zwei Durchgangsöffnungen 42C angeordnet, die einander paarweise diametral gegenüberliegen. Die beiden Durchgangsöffnungen 42C erstrecken sich über einen Bogenwinkel von etwas weniger als 90°. Wie Fig. 4b zeigt, führen die Durchströmöffnung 42A und die Durchgangsöffnungen 42C jeweils senkrecht durch die zylindrische Rotorscheibe 42 hindurch.

Die zu der in Fig. 4a, 4b gezeigten Rotorscheibe passende Statorscheibe ist in den Fig. 5a und 5b gezeigt. Diese Statorscheibe 40 weist einen etwas größeren Durchmesser als die Rotorscheibe 42 auf. Die zentrale Kreiszone der Statorscheibe 40 bildet eine Durchgangsöffnung 40A von gleicher Größe wie die Durchgangsöffnung 42A der Rotorscheibe 42. Die Durchgangsöffnung 40A ist von einer Ringzone 40B umgeben, deren Abmessungen mit denen der Ringzone 42B der Rotorscheibe 42 übereinstimmen. Schließlich weist die Statorscheibe 40 Durchgangsöffnungen 40D auf, deren Größe und Lage mit denen der Durchgangsöffnungen 42C der Rotorscheibe 42 übereinstimmen.

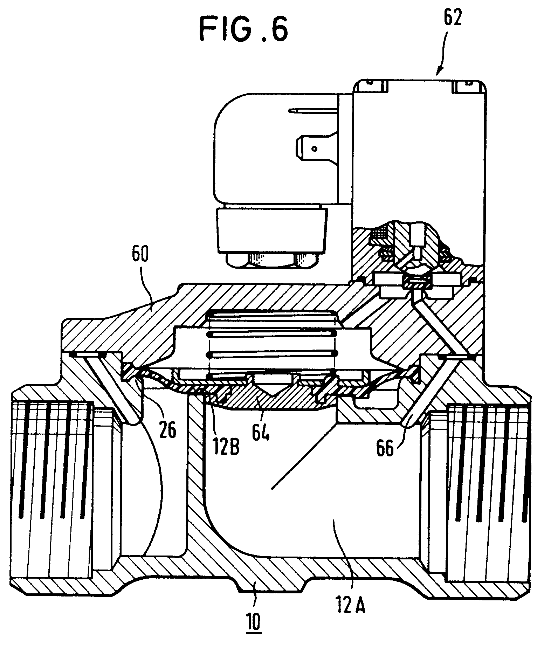

Fig. 6 zeigt ein herkömmliches Membranventil mit einem zweiteiligen Ventilgehäuse, dessen Gehäusekörper 10 vollständig mit dem in Fig. 1 gezeigten Gehäusekörper übereinstimmt, so daß er nicht erneut beschrieben wird. Die offene Seite dieses Gehäusekörpers 10 ist jedoch hier durch einen Deckel 60 verschlossen, der speziell für die Funktion eines Membranventils ausgelegt ist und an dem die hier nicht näher beschriebenen Antriebselemente 62 einer Membran 64 angeordnet sind. Die Membran 64 ist an ihrem äußeren Umfangsrand zwischen dem Deckel 60 und dem Ringwulst 26 eingespannt. Der zentrale Teil der Membran 64 bildet einen Schließkörper, der mit einem Ventilsitz zusammenwirkt, welcher durch die ringförmige Stirnfläche 12B gebildet ist. Bei der gezeigten Ausführung handelt es sich um ein vorgesteuertes Membranventil, bei welchem der erste Abschnitt 12A des Durchströmkanals über eine Bohrung 66 mit der Antriebseinrichtung 62 verbunden ist. Eine solche Bohrung ist auch in dem Gehäusekörper 10 der in Fig. 1 gezeigten Ausführungsform des Scheibenventils vorhanden, jedoch weist hier diese Bohrung 66 keine Funktion auf. Wie der Vergleich zwischen den Fig. 1 und 8 leicht erkennen läßt, kann das erfindungsgemäße Scheibenventil mit einem Ventilkörper ausgestattet werden, der völlig mit Standardbauformen von Ventilkörpern übereinstimmt, die bei Membranventilen verwendet werden. Hierdurch wird eine erhebliche Vereinfachung und Verbilligung von Fertigung, Wartung und Lagerhaltung erreicht.

**Patentansprüche**

1. Scheibenventil mit einem in einem Ventilgehäuse (10) gebildeten Durchströmkanal (12, 12A, 14, 14A) und wenigstens zwei quer zu diesem angeordneten, konzentrischen und gegeneinander verdrehbaren Scheiben (40, 42), von denen die eine (40) eine gehäusefeste Statorscheibe und die andere (42) eine drehbar im Gehäuse gelagerte Rotorscheibe bildet und deren glatte Stirnflächen einander berühren und die mit Durchströmöffnungen (40C, 42C) versehen sind, welche bei der Relativdrehung der Scheiben (40, 42) gegeneinander verschoben werden mit kontinuierlichem Übergang zwischen einer Öffnungsstellung, in der die Durchströmöffnungen der Scheiben (40, 42) zumindest annähernd einander gegenüberliegen, und einer Schließstellung, in der die Durchströmöffnung (42C) der einen Scheibe (42) einem geschlossenen Teil der anderen Scheibe (42) gegenüberliegt, wobei die Durchströmöffnungen (40C, 42C) radial außerhalb einer Ringzone (40B, 42B) der Scheiben (40, 42) angeordnet sind, jede Scheibe (40, 42) radial innerhalb dieser Ringzone (40B, 42B) eine zentrale Kreiszone (A) mit wenigstens einer darin angebrachten Durchströmöffnung (40A, 42A) aufweist, die Statorscheibe (40) auf ihrer von der Rotorscheibe (42) abgewandten Seite im Bereich ihrer Ringzone (40B) an eine ringförmige Stirnfläche (12B) dichtend angesetzt ist, an welcher ein erster Abschnitt (12A) des Durchströmkanals endet, und die Statorscheibe (40) im Bereich ihres Außenumfanges dichtend mit der Innenwandung des Gehäuses (10, 16) verbunden ist, dadurch gekennzeichnet, daß ein zweiter Abschnitt (14A) des Durchströmkanals in einen wenigstens teilweise ringförmigen Kanal (24) übergeht, der auf der Seite der Statorscheibe (40) gegenüber ihrer wenigstens einen Durchströmöffnung (40C) angeordnet und zu dieser hin geöffnet ist, daß das Gehäuse aus einem zwei Anschlußöffnungen (12, 14) und den ersten (12A) sowie den zweiten Abschnitt (14A) des Durchströmkanals aufweisenden Gehäusekörper (10) und aus einem Deckel (16) besteht, der eine offene Seite des Gehäusekörpers (10) verschließt, an welcher sich die ringförmige Stirnfläche (12B) am Ende des ersten Abschnitts (12A) des Durchströmkanals und eine Anlagefläche (32) für den Außenumfang der Statorscheibe (40) befinden, daß die Durchströmöffnungen (40A, 42A) der Scheiben (40, 42) auf ihrer von dem Gehäusekörper (10) abgewandten Seite in den Innenraum (16a) des Deckels (16) einmünden, daß die Durchströmöffnungen (42C) der Rotorscheibe (42) zu dem Innenraum (16a) des Deckels (16) hin durchgehend ausgebildet sind und daß die in der zentralen Kreiszone angeordnete Durchströmöffnung (42A) eine lichte Weite aufweist, die etwa gleich der lichten Weite des von der ringförmigen Stirnfläche (12B) begrenzten ersten Kanalabschnitts (12A) ist.

2. Scheibenventil nach Anspruch 1, dadurch gekennzeichnet, daß die Rotorscheibe (42) auf ihrer von der Statorscheibe (40) abgewandten Stirnfläche über ihre Ringzone (40B) kraftschlüssig an eine Drehantriebseinrichtung (34, 46, 48) angeschlossen ist.

3. Scheibenventil nach Anspruch 2, dadurch gekennzeichnet, daß die Drehantriebseinrichtung eine an eine Antriebswelle (34) koaxial angeschlossene Antriebsscheibe (48) und am Umfangsbereich der Antriebsscheibe (48) befestigte, in Umfangsrichtung voneinander beabstandete Übertragungselemente (46) aufweist, deren freie Enden kraftschlüssig an der Ringzone (42B) der Rotorscheibe (42) angreifen und zwischen denen das Medium radial durchströmen kann.

4. Scheibenventil nach Anspruch 3, dadurch gekennzeichnet, daß zwischen der Antriebsscheibe (48) und der Rotorscheibe (42) eine Druckfeder (50) eingesetzt ist, welche die Rotorscheibe (42) gegen die Statorscheibe (40) andrückt.

5. Scheibenventil nach einem der vorstehenden Ansprüche, dadurch gekennzeichnet, daß die Statorscheibe (40) an ihrem Außenumfang (40D) und/oder an ihrer Ringzone (40B) durch einen O-Ring (30, 45) gegen das Gehäuse (10) abgedichtet ist.

6. Scheibenventil nach Anspruch 5, dadurch gekennzeichnet, daß die ringförmige Stirnfläche (12B) des Gehäusekörpers (10) am Ende des ersten Abschnitts (12A) des Durchströmkanals die Gestalt eines Dichtwulstes für eine Membran (64) bildet, daß die Ebene der ringförmigen Stirnfläche (12B) am Ende des ersten Abschnitts (12A) des Durchströmkanals gegenüber der Ebene einer ringförmigen Anlagefläche (Ringwulst 26) für den Außenumfang (40D) der Statorscheibe (40) zur Innenseite des Gehäusekörpers (10) zurückversetzt ist, daß die Statorscheibe (40) an ihrer Ringzone (40B) mit einem Ringbund (41) versehen ist, dessen Höhe diese Versetzung ausgleicht, und daß der Deckel (16) mit darin drehbar gelagerter Antriebswelle (34) austauschbar ist gegen einen Deckel (60) mit Antriebselementen (62) eines Membranventils, wobei die ringförmige Anlagefläche (Ringwulst 26) für den Außenumfang der Statorscheibe dann zum Einspannen des Außenrandes der Membran (64) des Membranventils dient.

7. Scheibenventil nach einem der vorstehenden Ansprüche, dadurch gekennzeichnet, daß die Scheiben (40, 42) mehrere einander jeweils diametral gegenüberliegende Durchgangsöffnungen (40C, 42C) aufweisen und daß diese Durchgangsöffnungen (40C, 42C) sich in Umfangsrichtung über kleinere Winkel erstrecken als die dazwischenliegenden, geschlossenen Scheibenflächen.

**Claims**

1. Disc valve comprising a throughflow passage (12, 12A, 14, 14A) formed in a valve housing (10) and at least two concentric discs (40, 42) which are arranged transversely of said passage and rotatable with respect to each other, one (40) of which forms a housing-fixed stator disc and the other (42) a rotor disc mounted rotatably in the housing and the smooth end faces of which contact each other and which are provided with throughflow openings (40C, 42C) which on relative rotation of the discs (40, 42) are displaced with respect to each other with continuous transition between an open position in which the throughflow openings of the discs (40, 42) are at least approximately opposite each other and a closure position in which the throughflow opening (42C) of the one disc (42) lies opposite a closed portion of the other disc (42), the throughflow openings (40C, 42C) being arranged radially outside a ring zone (40B, 42B) of the discs (40, 42), each disc (40, 42) comprising radially within said ring zone (40B, 42B) a central circular zone (A) having at least one of the throughflow openings (40A, 42A) arranged therein, wherein the stator disc (40) on its side remote from the rotor disc (42) in the region of its ring zone (40B) is placed sealingly on an annular end face (12B) at which a first portion (12A) of the throughflow passage ends, and the stator disc (40) is connected in the region of its outer periphery sealingly to the inner wall of the housing (10, 16), characterized in that a second portion (14A) of the throughflow passage merges into an at least partially annular passage (24) which is arranged on the side of the stator disc (40) opposite the at least one throughflow opening (40C) thereof and open towards the latter, and that the housing consists of a housing body (10) comprising two connection openings (12, 14) and the first (12A) and second portion (14A) of the throughflow passage and a cover (16) which closes an open side of the housing body (10) at which the annular end face (12B) at the end of the first portion (12A) of the throughflow passage and an engagement surface (32) for the outer periphery of the stator disc (40) are disposed, that the throughflow openings (40A, 42A) of the discs (40, 42) on their side remote from the housing body (10) open into the inner space (16a) of the cover (16), that the throughflow openings (42C) of the rotor disc (42) are made continuous to the inner space (16a) of the cover (16) and that the throughflow opening (42A) arranged in the central circular zone has an inner width which is substantially equal to the inner width of the passage portion (12A) bordered by the annular end face (12B).

2. Disc valve according to claim 1, characterized in that the rotor disc (42) on its end face remote from the stator disc (40) is connected via its ring zone (40B) in force-locking manner to a rotary drive means (34, 46, 48).

3. Disc valve according to claim 2, characterized in that the rotary drive means comprises a drive disc (48) connected coaxially to a drive shaft (34) and peripherally spaced transmission elements (46) which are secured to the peripheral region of the drive disc (48) and the free ends of which engage the ring zone (42B) of the rotor disc (42) in force-locking manner and between which the medium can flow radially.

4. Disc valve according to claim 3, characterized in that between the drive disc (48) and the rotor disc (42) a pressure spring (50) is inserted which presses the rotor disc (42) against the stator disc (40).

5. Disc valve according to any one of the preceding claims, characterized in that the stator disc (40) is sealed at its outer periphery (40D) and/or at its ring zone (40B) by an O ring (30, 45) with respect to the housing (10).

6. Disc valve according to claim 5, characterized in that the annular end face (12B) of the housing body (10) at the end of the first portion (12A) of the throughflow passage forms the shape of a sealing bead for a diaphragm (64), that the plane of the annular end face (12B) at the end of the first portion (12A) of the throughflow passage is set back towards the inner side of the housing body (10) with respect to the plane of an annular engagement surface (annular bead 26) for the outer periphery (40D) of the stator disc (40), that the stator disc (40) is provided at its ring zone (40B) with an annular collar (41), the height of which compensates said setting back, and that the cover (16) with the drive shaft (34) mounted rotatably therein can be replaced by a cover (60) with drive elements (62) of a diaphragm valve, the annular engagement surface (ring bead 26) for the outer periphery of the stator disc then serving for clamping the outer edge of the diaphragm (64) of the diaphragm valve.

7. Disc valve according to any one of the preceding claims, characterized in that the discs (40, 42) comprise a plurality of respectively diametrically opposite through openings (40C, 42C) and that said through openings (40C, 42C) extend in the peripheral direction over a smaller angle than the closed disc areas lying therebetween.

**Revendications**

1. Obturateur à disques, comportant un conduit d'écoulement (12, 12A, 14, 14A) ménagé dans un carter (10) d'obturateur, et au moins deux disques concentriques (40, 42) disposés transversalement par rapport à ce conduit et pouvant tourner l'un par rapport à l'autre, l'un (40) de ces disques étant un disque stator fixé sur le carter et l'autre (42) étant un disque rotor monté de manière rotative dans le carter, les faces frontales lisses de ces disques étant en contact l'une avec l'autre, et les disques étant munis d'ouvertures d'écoulement (40C, 42C) qui coulissent l'une par rapport à l'autre lors d'une rotation relative des disques (40, 42), avec passage continu d'une position d'ouverture, dans laquelle les ouvertures d'écoulement des disques (40, 42) se font face au moins approximativement, à une position de fermeture, dans laquelle l'ouverture d'écoulement (42C) de l'un (42) des disques fait face à une partie pleine de l'autre disque (40), les ouvertures d'écoulement (40C, 42C) étant placées radialement à l'extérieur d'une zone annulaire (40B, 42B) des disques (40, 42), chaque disque (40, 42) comportant radialement à l'intérieur de cette zone annulaire (40B, 42B) une zone circulaire centrale (A) dans laquelle est ménagée au moins une ouverture d'écoulement (40A, 42A), le disque stator (40) étant fixé de façon étanche, par sa face opposée au disque rotor (42), dans la région de sa zone annulaire (40B), à une surface frontale annulaire (12B) au droit de laquelle se termine un premier tronçon (12A) du conduit d'écoulement, et le disque stator (40) étant relié de façon étanche dans la région de sa périphérie extérieure à la paroi interne du carter (10, 16), caractérisé en ce qu'un deuxième tronçon (14A) du conduit d'écoulement se transforme en un conduit (24) au moins partiellement annulaire, disposé sur le côté du disque stator (40) en face de sa (ses) ouverture(s) d'écoulement (40C) et ouvert vers celle(s)-ci, en ce que le carter est constitué par un corps de carter (10) comportant deux ouvertures de raccordement (12, 14) et le premier (12A) ainsi que le deuxième tronçon (14A) du conduit d'écoulement, et par un couvercle (16) qui ferme un côté ouvert du corps de carter (10) sur lequel se trouvent la surface frontale annulaire (12B) à l'extrémité du premier tronçon (12A) du conduit d'écoulement, et une surface d'appui de la périphérie extérieure du disque stator (40), en ce que les ouvertures d'écoulement (40A, 42A) des disques (40, 42) débouchent par leur côté opposé au corps de carter (10) dans l'espace intérieur (16a) du couvercle (16), en ce que les ouvertures d'écoulement (42C) du disque rotor (42) sont conçues de manière à traverser celui-ci vers l'espace intérieur (16a) du couvercle (16), et en ce que l'ouverture d'écoulement (42A) disposée dans la zone circulaire centrale a une largeur intérieure à peu près égale à la largeur intérieure du premier tronçon de conduit (12A) limité par la surface frontale annulaire (12B).

2. Obturateur à disques selon la revendication 1, caractérisé en ce que le disque rotor (42) est relié de force, par sa face frontale opposée au disque stator, et par l'intermédiaire de sa zone annulaire (40B), à un dispositif d'entraînement en rotation (34, 46, 48).

3. Obturateur à disques selon la revendication 2, caractérisé en ce que le dispositif d'entraînement en rotation comporte un disque d'entraînement (48) relié de façon coaxiale à un arbre d'entraînement (34), et des éléments de transmission (46) fixés à la périphérie du disque d'entraînement et espacés l'un de l'autre en direction périphérique, dont les extrémités libres sont de force en prise avec la zone annulaire (42B) du disque rotor (42), et entre lesquels le fluide peut s'écouler radialement.

4. Obturateur à disques selon la revendication 3, caractérisé en ce qu'entre le disque d'entraînement (48) et le disque rotor (42) est placé un ressort de compression (50) qui appuie le disque rotor (42) contre le disque stator (40).

5. Obturateur à disques selon l'une des revendications précédentes, caractérisé en ce que l'étanchéité entre le disque stator (40), au niveau de sa périphérie extérieure (40D) et/ou à celui de sa zone annulaire (40B), et le carter (10) est réalisée au moyen d'un joint torique (30, 45).

6. Obturateur à disques selon la revendication 5, caractérisé en ce que la surface frontale annulaire (12B) du corps de carter (10) à l'extrémité du premier tronçon (12A) du conduit d'écoulement, a la forme d'un bourrelet d'étanchéité pour une membrane (64), en ce que le plan de la face frontale annulaire (12B) à l'extrémité du premier tronçon (12A) du conduit d'écoulement, est désaxé vers l'intérieur du corps de carter (10) par rapport au plan d'une surface d'appui annulaire (bourrelet annulaire 26) de la périphérie extérieure (40D) du disque stator (40), en ce que le disque stator (40) est muni dans sa région annulaire (40B) d'une collerette annulaire (41) dont la hauteur est égale à ce décalage, et en ce que le couvercle (16) dans lequel un arbre d'entraînement (34) est monté de manière rotative peut être remplacé par un couvercle (60) muni d'éléments de transmission (62) d'un obturateur à membrane, la surface d'appui annulaire (bourrelet annulaire 26) de la périphérie extérieure du disque stator servant alors à la mise en tension du bord extérieur de la membrane (64) de l'obturateur à membrane.

7. Obturateur à disques selon l'une des revendications précédentes, caractérisé en ce que les disques (40, 42) comportent plusieurs ouvertures de passage (40C, 42C) diamétralement opposées l'une à l'autre, et en ce que ces ouvertures de passage (40C, 42C) s'étendent dans la direction périphérique sur des angles plus petits que les surfaces intermédiaires pleines des disques.

# FIG . 1

# FIG . 2

# FIG . 3

## FIG.4a

## FIG.4b

## FIG.5a

## FIG.5b

# FIG .6

62

60

26

12B

64

66

10

12 A